# EUROPEAN PATENT SPECIFICATION

(11) **EP 0 713 043 B1**
(45) Date of publication and mention of the grant of the patent: **05.08.1998**
(21) Application number: 95303623.3
(22) Date of filing: 26.05.1995
(51) Int. Cl.: F16L 19/08, F16L 21/06

(54) **Push-in pipe fitting with integrated locking clip**
Steckkupplungsrohranschluss mit integrierter Rohrschelle
Raccord de tuyaux avec collier de serrage intégré

(30) Priority: 15.11.1994 GB 9422994
(43) Date of publication of application: 22.05.1996
(73) Proprietor: De Fontein Ltd, Cheltenham, Gloucestershire GL50 3DT (GB)
(72) Inventor: Dorman, Charles Mark, Cheltenham, Gloucestershire GL50 3DT (GB)
(74) Representative: Baillie, Iain Cameron

(56) References cited:
- FR-A- 705 884
- GB-A- 416 118
- GB-A- 880 495
- US-A- 1 770 271
- US-A- 3 999 782

## Description

This invention covers push-in pipe fittings of the type using as a locking device on the pipe a ring split radially, having an inner surface with a plurality of ring-shaped crests and a conical outer surface.

In conventional types of fitting the outer conical surface of the locking ring interacts with a complementary conical surface inside the body of the fitting into which a nut or ring nut screws so as to lock the open ring onto the pipe. Between the nut or sleeve and the locking ring there is generally situated a seal and a metal washer.

In this type of fitting, the pipe is locked in the fitting by means of a locking ring which, once tightened, interferes with the outer surface of the pipe. However, this type of locking is not always sufficient to prevent the pipe from moving or actually slipping out of the fitting, particularly in the presence of hard operating conditions such as high pressures inside the pipe or stress outside the pipe or both.
Such fittings merely act as a means of connecting the pipe axially to another device and are not suitable for supporting the connected pipe as well. Thus, in order to secure the pipe to a wall or other support, it is at present necessary to use extra brackets or clips, which are separate from the coupling and are not by themselves capable of preventing uncontrolled movements and/or slippage of the pipe in the fitting.

The aim of this invention is to overcome the inconveniences and disadvantages of known fittings and to allow better mechanical locking between fitting and pipe in order to prevent axial movement and/or slippage of the latter, even in the presence of hard working conditions. It is the aim of this invention to provide a push-in fitting of the type described above, which becomes integral with a clip to form a device suitable for locking in two areas the pipe connected to it: in one area inside the fitting by means of the usual locking ring, and in one area outside the fitting but adjacent to it, by means of the integrated clip.

This aim is achieved by means of a pipe fitting as per claim 1 and with the following advantages:
- it increases mechanical locking between fitting and pipe;
- it eliminates the possibility of the pipe slipping in the fitting;
- it enables the pipe to be bracketed directly and adjacently to the fitting instead of to a wall or other support; and
- it eliminates the securing bracket that is normally applied to the pipe a short distance from the fitting.

The drawings attached hereto show a configuration of the fittting in accordance with the invention and which will be described in more detail here below. In said drawings:
Fig. 1 is a perspective view of the fitting with integrated clip;
Fig. 2 is an external view of the fitting in Fig. 1;
Fig. 3 is a section through the longitudinal view as per line III-III in Fig. 2; and
Fig. 4 is a sectional view as per line IV-IV in Fig. 2.

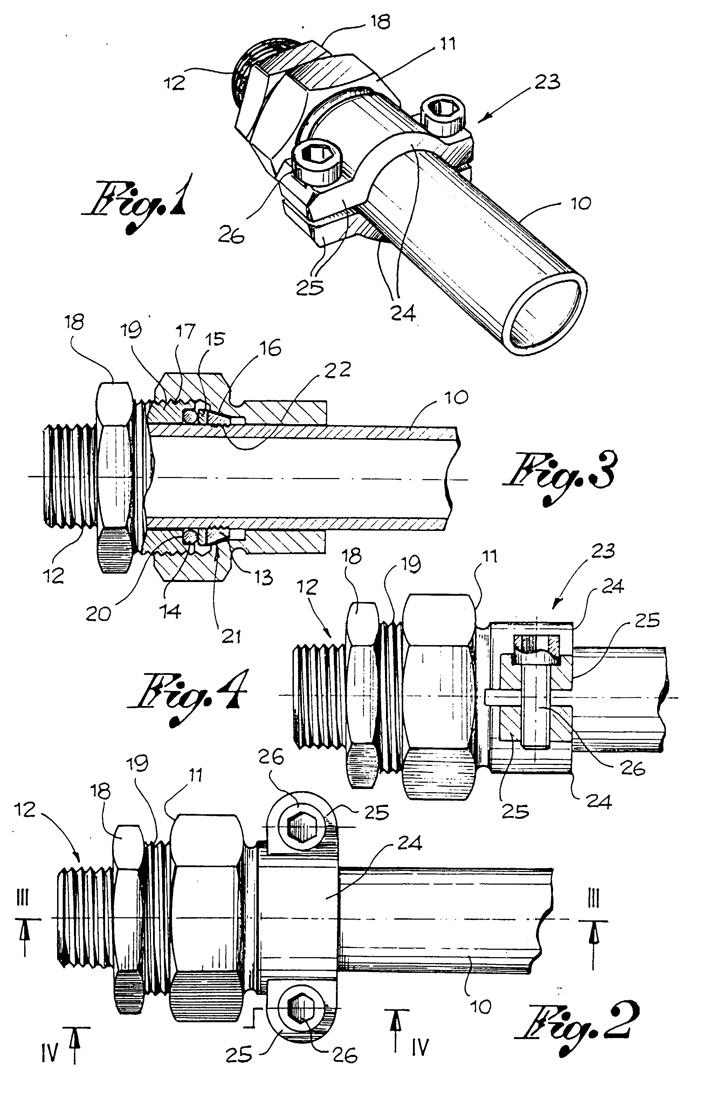

The fitting provided here can be the straight, elbow or tee type and includes means for quick fitting to one or more walls for connecting at least one pipe 10.

The fitting includes a body 11, a nut or locking sleeve 12, a locking ring 13, a ring-shaped seal 14 and optionally a washer 15.

The body 11, which may have externally at least one hexagonal gripping section, has inside it a seat 16 with a conical surface and a threaded portion 17. The nut or locking sleeve 12 has at least one external hexagonal gripping section 18 and one threaded portion 19 for screwing into the internal threaded portion 17 of the body 11. The nut or sleeve 12 has at its extremity facing towards the inside of the body 11 a ring-shaped butt seat 20. The locking ring 13 is split on one side and has externally a conical surface 21 corresponding to the conical seat 16 in the body 10, and internally several ring-shaped crests 22 designed to engage the external surface of the pipe 10 to be locked.

The locking ring 13 is situated in the conical seat 16 inside the body 11, the washer 15 is positioned adjacent to the larger base of the locking ring 13 and the ring-shaped seal 14 is adjacent to said washer. After the pipe 10 is inserted in the fitting, when the nut or sleeve 12 is screwed into the body 11, this locks the pipe by means of the locking ring 15 closing around said pipe.

In accordance with the present invention, the fitting is integrated with a pipe clip 23, which is obtained integrally with the body 10 of the section facing the section where the locking sleeve is tightened. In the example shown, the clip 23 is formed of two complementary half-shells 24, facing each other and delimiting all opening into which extends the pipe 10 that connects with the fitting. The two half-shells 24 are provided with perforated side fins 25 that can be connected by screws 26 in order to close the clip around the pipe 10.
Thus, once the pipe 10 has been locked inside the fitting, it can also be locked by means of the clip 23, giving a high degree of locking which would otherwise not be possible and enabling the above advantages to be attained in full.

The clip 23 may have a different configuration from that described, still within the limits of the invention, when it is integral with the body of the fitting.

## Claims

1. A pipe fitting including a body (11), having internally a conical seat (16) and a threaded portion (17), a locking ring split radially (13) having externally a conical surface designed to interact with the conical seat of said body, and internally several ring-shaped crests that interfere with the external surface of the pipe to lock, and a nut or locking sleeve (12) that screws onto the threaded portion of said body to push the locking ring into said conical seat and lock it tightly around the pipe, between said ring and said nut or sleeve there being interposed a seal and optionally a washer, characterized by a pipe clip (23) integral with said body (11) and designed to act as a further means of locking the pipe adjacently to the fitting.

2. Pipe fitting as defined in claim 1, in which said pipe clip (23) is co-axial with the body of the fitting and integral with it on the other side of the nut or locking sleeve.

3. Pipe fitting as defined in claims 1 and 2, in which said clip (23) is formed of two complementary half-shells (24), facing each other and delimiting an opening into which the pipe extends and in which said half-shells have perforated side fins that can be connected by means of screws (26) in order to tighten the half-shells around the pipe.

## Patentansprüche

1. Rohranschlußstück mit einem Körper (11), mit einem internen konischen Sitz (16) und einem Gewindeabschnitt (17), einem radial geteilten Sicherungsring (13), der extern eine konische Oberfläche aufweist, die so gestaltet ist, daß sie mit dem konischen Sitz des genannten Körpers zusammenwirken kann, und mit mehreren internen, ringförmigen Scheiteln, die mit der externen Oberfläche des Rohrs zur Verriegelung eingreifen, und mit einer Mutter oder Sicherungsmuffe (12), die auf den Gewindeabschnitt des genannten Körpers geschraubt wird, um den Sicherungsring in den genannten konischen Sitz zu drücken und diesen fest um dem Rohr zu verriegeln, wobei sich zwischen dem genannten Ring und der genannten Mutter oder Muffe eine Dichtung und optional eine Unterlegescheibe befindet,
gekennzeichnet durch eine mit dem genannten Körper (11) integrale Rohrschelle (23), die so gestaltet ist, daß sie als weiteres Mittel zur Verriegelung des Rohrs eng an dem Anschlußstück dient.

2. Rohranschlußstück nach Anspruch 1, wobei die genannte Rohrschelle (23) koaxial mit dem genannten Körper des Anschlußstücks ausgerichtet und auf der anderen Seite der Mutter oder der Sicherungsmuffe integral mit diesem ausgebildet ist.

3. Rohranschlußstück nach Anspruch 1 oder 2, wobei die genannte Schelle (23) aus zwei zusammenpassenden Schellenhälften (24) gebildet wird, die zueinander ausgerichtet sind und eine Öffnung begrenzen, in die sich das Rohr erstreckt, und wobei die genannten Schellenhälften perforierte Seitenstege aufweisen, die durch Schrauben (26) miteinander verbunden werden können, um die Schellenhälften um das Rohr festzuziehen.

## Revendications

1. Raccord de tuyau comprenant un corps (11), ayant à l'intérieur un siège conique (16) et une partie filetée (17), une bague de blocage (13) fendue radialement ayant à l'extérieur une surface conique conçue pour agir de concert avec le siège conique dudit corps, et à l'intérieur plusieurs crêtes en forme de bague qui agissent de concert avec la surface externe du tuyau à des fins de blocage, et un écrou ou manchon de blocage (12) qui se visse sur la partie filetée dudit corps afin de pousser la bague de blocage dans ledit siège conique et de la bloquer fermement autour du tuyau, un joint et éventuellement une rondelle étant interposés entre ladite bague et ledit écrou ou manchon, caractérisé par un dispositif de serrage de tuyau (23) formé d'un seul tenant avec ledit corps (11) et conçu pour agir comme autres moyens de blocage du tuyau à côté du raccord.

2. Raccord de tuyau selon la revendication 1, dans lequel ledit dispositif de serrage de tuyau (23) est coaxial au corps du raccord et d'un seul tenant avec celui-ci de l'autre côté de l'écrou ou manchon de blocage.

3. Raccord de tuyau selon les revendications 1 et 2, dans lequel ledit dispositif de serrage (23) est formé de deux demi-coquilles (24) complémentaires, placées l'une en face de l'autre et délimitant une ouverture dans laquelle s'étend le tuyau et dans laquelle lesdites demi-coquilles possèdent des ailettes latérales perforées qui peuvent être connectées au moyen de vis (26) afin de serrer les demi-coquilles autour du tuyau.
